# EUROPEAN PATENT APPLICATION

(11) **EP 2 463 737 A2**
(43) Date of publication of application: **13.06.2012**
(21) Application number: 11191072.5
(22) Date of filing: 29.11.2011
(51) Int. Cl.: G05B 19/404

(54) **Method for determining the position of a tool**

(30) Priority: 07.12.2010 DE 102010054393
(71) Applicant: Chiron-Werke GmbH & Co. KG, 78532 Tuttlingen (DE)
(72) Inventor: Prust, Dirk, 78532 Tuttlingen (DE)
(74) Representative: Witte, Weller & Partner

(57) **Abstract**

A machine tool (10) comprises a main spindle (24) movable via a machine control (26) and associated measuring systems (26a) relative to a workpiece holder (12) in a coordinate system (27) with a coordinate origin (28), and comprise a tool magazine (31) having storage spaces (30) for tools (25, 32, 33, 34), wherein the main spindle (24) is moved into a tool change position in which a used tool (25) is exchanged for a new tool (32) to be used. A separate measuring system (43, 46) is provided which indicates whether the main spindle (24), in connection with the tool change, has assumed a measuring position (50) in which the position of the main spindle (24) relative to the coordinate origin (28) is determined via a machine control (26) and associated measuring systems (26a) and is used in order to determine at least one correction value (Δy, Δz). A method for compensating for thermal displacements is carried out on the machine tool (20) (Fig. 1).

## Description

The present invention relates to a method for compensating for thermal displacements on a machine tool, which machine tool comprises a main spindle movable via a machine control and via associated measuring systems relative to a workpiece holder in a coordinate system with a coordinate origin, and which machine tool comprises a tool magazine having storage spaces for tools, in which method the main spindle is moved into a tool change position in which a used tool is exchanged for a new tool to be used.

The present invention also relates to a machine tool, which machine tool comprises a main spindle movable via a machine control and via associated measuring systems relative to a workpiece holder in a coordinate system with a coordinate origin, and which machine tool comprises a tool magazine having storage spaces for tools, wherein the main spindle is moved into a tool change position in which a used tool is exchanged for a new tool to be used.

Such methods and machine tools are known to the applicant from practice.

In the known machine tools, the accuracy of the machining is affected in particular by thermal displacements which occur in particular at the main spindle and at the measuring systems with which the position of the main spindle relative to the coordinate origin is determined. On the one hand, the main causes of these thermal displacements are expansions at motors, ball-screws shafts, linear guides and the main spindle bearing.

On the other hand, deformations caused by uneven heating of different machine components also affect the machining accuracy.

The causes of these thermal displacements are internal and external heat sources, wherein the external heat sources can be countered by rooms at the right temperature and by the arrangement of the machine tool in such a way that it is not exposed directly to the sun.

The internal heat sources are mainly the heat-generating machine components, the self-heating of which can have different effects until the operating temperature is reached. This includes the spindle rotation, internal friction and in particular the cutting process itself and the hot metal chips arising in the process and the fed cooling lubricant.

All these factors influence the thermal behavior of the machine tool and must be reduced in order to achieve appropriate machining accuracies.

These factors can either be reduced by design measures or compensated for in terms of control engineering, for which purpose direct and indirect methods are used.

An example for the reduction of the accuracy problems caused by the thermal displacement by means of design measures is described in DE 103 43 320 A1, where certain components are brought to and hold at the correct temperature.

With direct compensation, the ACTUAL position of the main spindle is measured via a separate measuring system and is compared with the DESIRED position currently predetermined in each case by the control. The deviation determined is used in the control in order to correct the path control commands.

Such a method is known, for example, from DE 103 30 915 A1.

In the known method, a separate measuring system in the form of a laser light barrier is provided in the working space of a machine tool, said laser light barrier being arranged obliquely to the linear travel axes of the spindle head. A measuring tool is clamped in place in the spindle head at certain times, with which measuring tool the light barrier is then approached parallel to the travel axes and the position of the spindle head is determined when the light barrier is interrupted. The Actual values measured in this way are compared with Desired values predetermined by the control and correction values are calculated therefrom, which correction values the control takes into account when new Desired values are allocated.

Although this method is very accurate, the production process has to be interrupted for the measuring operation; the measurement is therefore not carried out during the primary processing time. The fact that an interruption of the production process is not possible during certain production steps can be regarded as a further problem. If these production steps are prolonged, no compensation can be effected during this time interval.

DE 102 51 829 B4, DE 10 2005 060 104 B4 and DE 38 36 263 C1 disclose further methods for compensating for thermal displacements in a machine tool. All three methods require a measuring tool to be clamped in place in the main spindle and require the latter to then be moved to a measuring point where measured values are generated which indicate the occurrence of thermal displacements. These methods are also time-consuming and cannot be carried out during the primary processing time.

With indirect compensation, the thermally induced deviations in the position of the main spindle relative to the workpiece are calculated by means of a mathematical model from measured auxiliary variables, such as the temperature at various points in the machine tool, and are used in the control for the compensation.

This method is known, for example, from DE 103 44 903 A1.

Although these measurements are possible during the primary processing time, they have to be extensive in order to determine the parameters which enter into the mathematical model. In addition, the mathematical model often reproduces the actual operating state only partially, and therefore these methods are not as accurate as the above-mentioned direct compensation.

The main disadvantages of the prior art described in this respect lie in the fact that the measurements cannot be carried out sufficiently accurately and quickly and often cannot be carried out during the main processing time.

For all these reasons, there is still a demand for novel machine tools and novel methods in order to be able to accurately determine the position of the tool relative to the workpiece without thermal displacements affecting this accuracy.

In view of the above, the object of the present invention is to improve the method mentioned at the outset and the machine tool mentioned at the outset in such a way that thermal displacements can be quickly detected and compensated for in a simple manner in terms of design without the production process being interrupted or excessively delayed.

In the method for compensating for thermal displacements on a machine tool, as mentioned at the outset, this object is achieved in that, preferably in connection with the tool change, the main spindle is moved with the aid of a separate measuring system into or through a measuring position in which the position of the main spindle relative to the coordinate origin is determined via the machine control and the associated measuring systems and at least one correction value is determined therefrom.

In the machine tool mentioned at the outset, this object is achieved in that a separate measuring system is provided which indicates whether the main spindle, preferably in connection with the tool change, has assumed a measuring position in which the position of the main spindle relative to the coordinate origin is determined via the machine control and the associated measuring systems and is used in order to determine at least one correction value.

Namely the inventor of the present application has recognized that in particular the tool change position of the main spindle enables correction values for the thermal displacement to be determined quickly and in a simple manner in terms of design.

During the tool change according to the pickup method, the main spindle must in any case be removed from the workpiece and the tool used hitherto must be deposited in a free storage space. After that, the main spindle must move away from the deposited tool and then either approach a new storage position in the tool magazine or else wait until the tool magazine has performed an indexing movement, that is to say has moved a storage space with the next tool to be used into the transfer position.

This waiting time or transfer time is now used according to the invention in order to approach or pass through, with the main spindle, a measuring position for which a comparison between DESIRED values and ACTUAL values of the assumed position is then carried out. Correction values which the machine control takes into account when new Desired values are allocated are then calculated from the comparison. In this case, the separate measuring system delivers the information as to whether the main spindle has reached the measuring position to the machine control, which then determines the actual position of the main spindle by means of the measuring systems which are provided anyway for the traveling movement of the main spindle. This ACTUAL position is now compared with the DESIRED position which the main spindle would assume if no thermal displacements were present and which is stored in the machine control. The main spindle can in this case either stop directly in the measuring position or can be moved still further because it either merely passes through the measuring position when approaching another position, such that the associated measuring systems detect the ACTUAL values "on the fly", as it were, or because it does not stop until it overruns the measuring position on account of inertia and control delays.

If the tool change is effected using a tool changer or even at a travelling tool magazine, waiting times or transfer times likewise arise which can be utilized according to the invention.

The point at which the measuring position is reached is detected according to the invention via a separate measuring system which interacts directly with the main spindle or with the headstock mounting the main spindle. It is therefore not necessary to introduce a separate measuring tool into the main spindle or to approach a separate measuring position during the main time. On the contrary, the current position of the main spindle is preferably determined in connection with a tool change, that is to say, at a time at which machining of the workpiece is not possible anyway.

In this way, it is possible to detect and if need be correct the thermal displacements of the headstock during every tool change. This is because the inventor has recognized that it is sufficient for the vast majority of applications if the thermal displacements are compensated for at the times of the tool change; more frequent corrections are not necessary. With the method according to the invention, however, it is possible to also approach or pass through the measuring position out of tool change time if the associated loss in the production rate can be accepted in favor of accuracy. Nonetheless, the novel method is also quicker in this case than methods in the prior art, because no separate measuring tool has to be introduced into the main spindle.

The object underlying the invention is therefore completely solved in this way.

In this case, it is preferred if the separate measuring system acts indirectly or directly between the main spindle and a measuring location which is fixed in at least one coordinate direction relative to the workpiece holder, wherein the separate measuring system preferably has a measuring surface and at least one measuring sensor, preferably a measuring probe, wherein either the measuring surface or the measuring sensor is connected to the main spindle, and the measuring sensor or the measuring surface is arranged at the measuring location.

These measures permit an inexpensive measuring system of simple design which in addition works quickly and reliably, in particular if a measuring probe is used in the separate measuring system, that is to say a switching measuring system is used which indicates like a yes/no decision whether the main spindle has assumed the measuring position.

In the novel method, it is preferred in this connection if the main spindle is moved towards the measuring position until the separate measuring system responds.

It is advantageous here that the measuring position can be assumed quickly and reliably. In the process, the main spindle can be moved at creep speed.

It is generally preferred if the main spindle deposits the used tool in a free storage space and removes a new tool to be used from an occupied storage space, wherein the main spindle preferably approaches or passes through the measuring position after the used tool is deposited in the free storage space, and the tool magazine also preferably exchanges the storage space now occupied by the used tool for a storage space which is fitted with the new tool to be used, while the main spindle travels into the measuring position, wherein the tool magazine permits a tool change by the pickup method.

It is advantageous here that no main time or at least virtually no main time is lost; the measuring position is approached while at the same time the tool magazine performs an indexing movement.

Further advantages follow from the description and the attached drawing.

It goes without saying that the above-mentioned features and the features still to be explained below can be used not only in the respectively specified combination but rather also in other combinations or on their own without departing from the scope of the invention.

An embodiment of the invention is shown in the drawing and is described in more detail below. In the drawing:
- Fig. 1: shows the novel machine tool in a schematic side view, the tool change position of tool magazine and headstock being indicated by broken lines;
- Fig. 2: shows a schematic cutaway plan view of the tool magazine from Fig. 1;
- Fig. 3: shows a schematic enlarged detail of a further embodiment of the machine tool from Fig. 1, in the region of the main spindle and during the tool change;
- Fig. 4: shows an illustration as in Fig. 3, at a later stage of the tool change; and
- Fig. 5: shows an illustration as in Fig. 3, at an even later stage of the tool change, in which the tool magazine performs an indexing movement and the position of the headstock is determined at the same time.

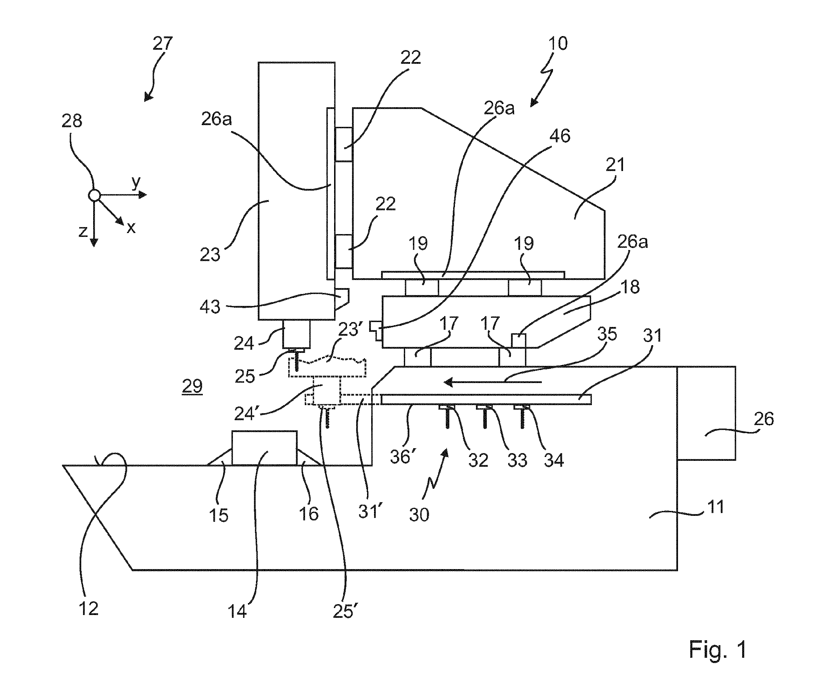

A machine tool 10 which is designed as a vertical travelling column machine is shown in Fig. 1 in a schematic side view. The novel machine tool can be provided as a horizontal travelling column machine, in a portal type of construction or in anyone of the other conventional types of construction; the vertical travelling column machine merely serves here to explain the invention.

The machine tool 10 comprises a base 11 which can be produced from a reinforced bar network or concrete polymer, from steel or cast iron. Formed on the base 11 is a schematically indicated workpiece table as workpiece holder 12, on which a workpiece 14 can be seen in Fig. 1, which is mounted on the workpiece table 12 via clamping means 15 and 16.

Arranged on the base 11 via linear guides 17 is an x-slide 18, which can be moved into and out of the drawing plane of the figure, which corresponds to the x-axis of the machine tool 10.

Arranged on the x-slide 18 are guide shoes 19, in which a column 21 can be moved transversely to the x-direction, that is to say, in the y-direction, relative to the base 11.

On its front side, the column 21 has guides 22, on which a headstock 23 can be moved transversely to the x-direction and transversely to the y-direction, that is to say in the z-direction, relative to the base 11.

In a manner known per se, the headstock 23 carries a rotationally driven main spindle 24, in which a tool 25 for machining the workpiece 14 can be clamped in a known manner.

Linear guides 17, x-slides 18, guide shoes 19, column 21, guides 22 and headstock 23 are components which are provided with separate drives and linear scales or other measuring systems in order to be able to specifically move, by means of a machine control indicated at 26, the tool holder 24 relative to the workpiece holder 12 and control the position of the respective component. In Fig. 1, these associated measuring systems are indicated at 26a.

In the manner described to this extent, the tool 25 can therefore be moved relative to the workpiece 14 in three axes which are orthogonal to one another, as shown by a coordinate system indicated at 27. The coordinate system 27 defines a coordinate origin 28, relative to which the position of the workpiece 14 is known and the tool 25 is moved in a working space 29 under the supervision of the machine control 26 and with the aid of the measuring systems 26a in order to machine the piece 14.

Also indicated in Fig. 1 is a tool magazine 31 which has a plurality of storage spaces 30 for tools 32, 33, 34, which can be introduced into the main spindle as replacement for the tool 25. Only three storage spaces are shown in Fig. 1, although there can be up to 60 or more storage spaces.

For the tool change, the tool magazine 31 is moved in the direction of an arrow 35 relative to the base 11 in such a way that it comes to lie in the working space 29 with its front end 36, at which a free storage space is located. This position of the tool magazine 31 is shown by broken lines in Fig. 1 and is designated by 31ʹ.

The headstock 23 is now moved in such a way that the main spindle 24 can deposit the tool 25 in the free storage space of the tool magazine 31. This tool change position of the headstock 23 is designated by 23'. The positions of the main spindle 24 and of the tool 25 are designated by 24' and 25', respectively.

After the tool 25 has been deposited in the free storage space of the tool magazine 31, the headstock 23 travels upwards, that is to say in the z-direction, in order to release the tool 25 from the main spindle 24. The tool magazine 31 then moves a new tool 33, 34 or 35 to its front end 36, where it is picked up by the main spindle 24.

This type of tool change is referred to as a pickup method and is sufficiently well known as such from the prior art.

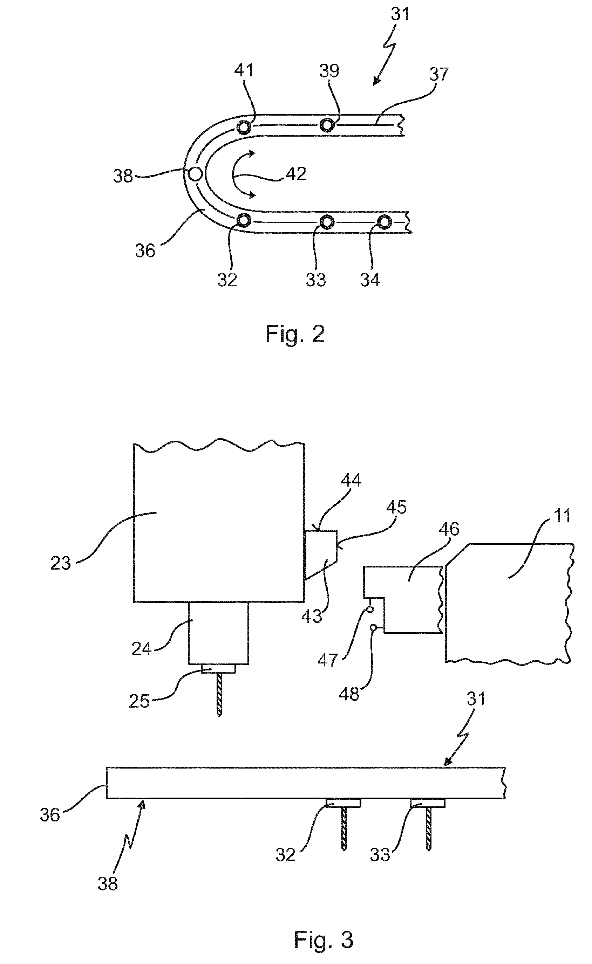

For illustration, the tool magazine 31 is shown once again in Fig. 2 in a cutaway schematic plan view. The tool magazine 31 can have a horseshoeshaped or closed transport path 37 for tools. Shown at its free front end 36 is a free storage space 38, which receives the tool 25 from the main spindle 24 in the course of the tool exchanging described above.

Apart from the tools 32, 33, 34 already shown in fig. 1, further tools 39, 41 are indicated which can be moved back and forth along the transport path 37, as indicated by an arrow 42. In this way, each tool 32, 33, 34, 39, 41 can be moved to the front end 36 and can be introduced there as replacement into the main spindle 24. Such tool magazines are also referred to as chain magazines.

After the exchange of a tool, the tool magazine 31 is then moved out of the working space 29 again against the direction of the arrow 35 in Fig. 1 and the machining of the workpiece 14 is continued with a new tool.

For the sake of completeness, it is noted here that the novel machine tool can also be equipped with a stationary tool magazine with tool change by the pickup method or with other tool magazines in which the tool change is not effected by the pickup method but by means of associated tool change devices. Here, the chain magazine serves merely to explain the invention.

During operation of the machine tool 10, thermal displacements now occur, as already mentioned at the outset. These thermal displacements result in the DESIRED position of the tool 25 relative to the coordinate origin 28 deviating from the ACTUAL position determined by the measuring system 26a, and so the workpiece 14 cannot be machined with the requisite accuracy and reproducibility. In order to compensate for these displacements, according to the invention the position of the headstock 23 relative to the coordinate origin 28 is determined during the tool change, for which purpose the machine tool 10 is provided with a separate measuring system.

Fig. 3 shows a schematic and enlarged detail of the machine tool 10 from Fig. 1 in the region of the main spindle 24, which is located in its tool change position, in which the tool 25 is deposited in the free storage space 38 at the front end 36 of the tool magazine 31. Arranged on the headstock 23 is a block 43 having two measuring surfaces 44 and 45 which interact with a measuring arrangement 46 in a manner still to be described. The block 43 and the measuring arrangement 46 form the above-mentioned separate measuring system for compensating for thermal displacements.

The block 43 and the measuring arrangement 46 are also shown in Fig. 1, where it can be seen that the measuring arrangement 46 is secured to the x-slide 18. However, the measuring arrangement 46 can also be fastened directly to the base 11, as is the case in the embodiment in Figs 3 to 5.

Returning to Fig. 3, it can be seen that the measuring arrangement 46 has two measuring sensors which are connected to the machine control 26 and are in the form of measuring probes 47 and 48 which interact with the horizontally running measuring surface 44, that is to say the measuring surface 44 lying in the x/y-plane, and respectively with the vertically running measuring surface 45, that is to say the measuring surface 45 lying in the x/z-plane. The position of the block and thus of the headstock in the z-direction is detected with the measuring surface 44 and the measuring probe 47 and the position thereof in the y-direction is detected with the measuring surface 45 and the measuring probe 48, as will be explained in more detail below.

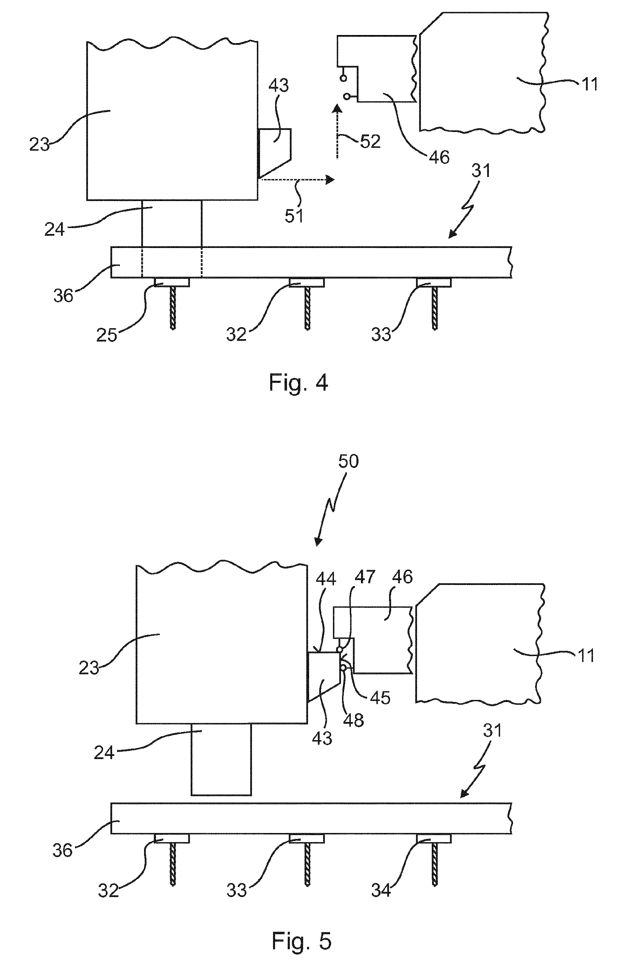

First of all, Fig. 4 shows the state at a later stage of the tool change when the main spindle 24 has deposited the tool 25 in the storage space 38 which was free beforehand. The main spindle 24 must now release the tool 25, for which purpose the headstock 23 must travel upwards. The tool magazine 31 can then move the tool 25 out of the front end 36 and at the same time move another tool to its position; in Fig. 5 this is the tool 32. This sequence of movements in the tool magazine 31 is also referred to as "indexing".

While the tool magazine 31 performs such an indexing movement, the headstock 23 at the same time travels in the direction of the arrows 51 and 52 shown in Fig. 4 into a measuring position designated by 50, as a result of which the block 43 is moved into the "measuring corner" of the measuring arrangement 46. These movements in the direction of the arrows 51 and 52 are continued until the machine control 26 recognizes that the measuring probe 47 is touching the measuring surface 44 and the measuring probe 48 is touching the measuring surface 45. The separate measuring system 43, 46 therefore recognizes when the main spindle 24 has assumed the measuring position 50. In the process, it is not necessary for the main spindle 24 itself to stop in the measuring position; for example, the main spindle 24 can also pass through the measuring position at creep speed, the machine control 26 then detecting the actual values by means of the associated measuring systems 26a when the separate measuring system 43, 46 indicates that the measuring position has been reached.

The relative position which the block 43 assumes upon reaching the measuring position 50 in the y-axis and z-axis relative to the coordinate origin 28 is therefore detected by the machine control 26 and the measuring systems 26a; it corresponds to the ACTUAL position of the headstock 23. This ACTUAL position is then compared with the DESIRED position which the headstock 23 would assume and which would then be detected by the measuring system 26a if the block 43 were moved into the "measuring corner" 46 in the manner described and no thermal displacements had occurred. The DESIRED position is filed in the machine control 26.

Correction values Δy and Δz are calculated from the deviation between DESIRED position and ACTUAL position, and these correction values Δy and Δz correspond to the difference between the DESIRED position and the ACTUAL position in the direction of the y-axis and z-axis, respectively, and are taken into account by the machine control 26 during the further machining of the workpiece 14 by the machine control 26 changing the stored DESIRED values for the DESIRED positions, following in the course of the further machining of the workpiece 14, of the main spindle 24 or of the tool 32 by the correction values Δy and Δz. In other words, the correction values are taken into account by the machine control when new DESIRED values are allocated.

If the tool 32, for example, is to approach a position (x1, y1, z1) relative to the coordinate origin 28, the corrected position (x1, y1+Δy, z1+Δz) is now approached.

It is possible in this way to detect and if need be to correct the thermal displacements of the headstock 23 during every tool change. The additional measuring system consisting of block 43 and measuring arrangement 46 provided for this purpose is used together with the machine control 26 and the components present anyway, which are provided with drives and measuring systems of their own, in order to specifically move the headstock 23 by means of the machine control 26 and determine an ACTUAL position predetermined by the "measuring corner". The separate measuring system 43, 46 is in this case only used in order to indicate to the machine control 26 that the main spindle 24 or the headstock 23 has reached the measuring position 50.

This requires only a small additional cost in terms of design and control engineering, the ACTUAL position being determined during the time when the headstock 23 would otherwise wait for the tool magazine 31 to have performed an indexing movement. This determination of the thermal displacement "during the tool change" is therefore not only simple in terms of design - it is also effected without, or at least virtually without, a delay compared with an operation without compensation for thermal displacements according to the invention - but also offers additional advantages with regard to machining accuracy and reproducibility.

It has been found in this case that the determination of the deviations in the y- and z-directions is sufficient for compensating for thermal displacements because the machine tool is constructed symmetrically to the y/z-plane. In other words, there are no tilting moments in the x-direction, the travel accuracy in the x-direction also being more accurate than in the y- and z-directions, because the x-slide 18 is moved by a ball screw spindle which is compensated by a glass scale. According to the invention, therefore, only thermal displacements in the direction of the y- and z-axes are compensated for.

For this reason, the measuring arrangement 46 can also be attached to the x-slide 18 and not solely to the base 11. This is because it is essential that the measuring arrangement 46, which forms, as it were, the measuring location, is fixed in the y- and z-directions relative to the workpiece holder 12.

It is of course also possible, in a similar manner to a kinematic reversal, to fasten the block 43 to the x-slide 18 or the base 11, that is to say the measuring location, and to provide the measuring arrangement 46 on the headstock 23.

## Claims

1. Method for compensating for thermal displacements on a machine tool (10), which machine tool comprises a main spindle (24) movable via a machine control (26) and via an associated measuring systems (26a) relative to a workpiece holder (12) in a coordinate system (27) with a coordinate origin (28), and which machine toll comprises a tool magazine (31) having storage spaces (30, 38) for tools (25, 32, 33, 34, 39, 41), in which method the main spindle (24) is moved into a tool change position in which a used tool (25) is exchanged for a new tool (32) to be used,
**characterized in that**, preferably in connection with the tool change, the main spindle (24) is moved with the aid of a separate measuring system (43, 46) into or through a measuring position (50) in which the position of the main spindle (24) relative to the coordinate origin (28) is determined via the machine control (26) and the associated measuring systems (26a) and at least one correction value (Δy, Δz) is determined therefrom.

2. Method according to Claim 1, **characterized in that** the separate measuring system (43, 46) acts indirectly or directly between the main spindle (24) and a measuring location which is fixed in at least one coordinate direction (y, z) relative to the workpiece holder (12).

3. Method according to Claim 2, **characterized in that** the separate measuring system (43, 46) has at least one measuring surface (44, 45) and at least one measuring sensor (47, 48), wherein either the measuring surface (44, 45) or the measuring sensor (47, 48) is connected to the main spindle (24), and the measuring sensor (47, 48) or the measuring surface (44, 45) is arranged at the measuring location.

4. Method according to Claim 2 or 3, **characterized in that** the main spindle (24) is moved in a direction (51, 52) towards the measuring position (50) until the separate measuring system (43, 46) responds.

5. Method according to anyone of Claims 1 to 4, **characterized in that** the main spindle (24) deposits the used tool (25) in a free storage space (38) and removes a new tool (32) to be used from an occupied storage space.

6. Method according to Claim 5, **characterized in that** the main spindle (24) approaches or passes through the measuring position (50) after the used tool (25) is deposited in the free storage space (38).

7. Method according to Claim 6, **characterized in that** the tool magazine (31) exchanges the storage space (38) occupied by the used tool (25) for a storage space which is fitted with the new tool (32) to be used, while the main spindle (24) travels into the measuring position (50).

8. Machine tool comprising a main spindle (24) movable via a machine control (26) and associated measuring systems (26a) relative to a workpiece holder (12) in a coordinate system (27) with a coordinate origin (28), and comprising a tool magazine (31) having storage spaces (30, 38) for tools (25, 32, 33, 34, 39, 41), wherein the main spindle (24) is moved into a tool change position in which a used tool (25) is exchanged for a new tool (32) to be used,
**characterized in that** a separate measuring system (43, 46) is provided which indicates whether the main spindle (24), preferably in connection with the tool change, has assumed a measuring position (50) in which the position of the main spindle (24) relative to the coordinate origin (28) is determined via the machine control (26) and the associated measuring systems (26a) and is used in order to determine at least one correction value (Δy, Δz).

9. Machine tool according to Claim 8, **characterized in that** the separate measuring system (43, 46) acts indirectly or directly between the main spindle (24) and a measuring location which is fixed in at least one coordinate direction (y, z) relative to the workpiece holder (12).

10. Machine tool according to Claim 9, **characterized in that** the separate measuring system (43, 46) has at least one measuring surface (44, 45) and at least one measuring sensor (47, 48), wherein either the measuring surface (44, 45) or the measuring sensor (47, 48) is connected to the main spindle (24), and wherein either the measuring sensor (47, 48) or the measuring surface (44, 45) is arranged at the measuring location.

11. Machine tool according to Claim 10, **characterized in that** the measuring sensor (47, 48) is a measuring probe (47, 48).

12. Machine tool according to anyone of Claims 8 to 11, **characterized in that** the tool magazine (31) permits a tool change by the pickup method.
